(19) Europäisches Patentamt
European Patent Office
Office européen des brevets

(11) EP 4 796 577 A1

(12) EUROPEAN PATENT APPLICATION
published in accordance with Art. 153(4) EPC

(43) Date of publication:
**26.08.2026 Bulletin 2026/35**

(21) Application number: **25876068.5**

(22) Date of filing: **10.11.2025**

(51) International Patent Classification (IPC):
***C08J 7/04*** (2020.01) ***C08J 5/18*** (2006.01)
***C09D 183/04*** (2006.01) ***C09D 7/61*** (2018.01)
***C09D 7/65*** (2018.01) ***C08L 1/02*** (2006.01)
***C08L 33/04*** (2006.01) ***C08L 61/28*** (2006.01)
***H01M 4/04*** (2006.01)

(52) Cooperative Patent Classification (CPC):
**C08J 5/18; C08J 7/04; C08L 1/02; C08L 33/04; C08L 61/28; C09D 7/61; C09D 7/65; C09D 183/04; H01M 4/04**

(86) International application number:
**PCT/KR2025/018396**

(87) International publication number:
**WO 2026/101349 (15.05.2026 Gazette 2026/20)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.11.2024 KR 20240158520**
**06.11.2025 KR 20250166455**

(71) Applicant: **Youlchon Chemical Co., Ltd.**
**Seoul 07057 (KR)**

(72) Inventors:
- **JANG, Nam Yun**
  **Ansan-si, Gyeonggi-do 15430 (KR)**
- **KIM, Yong Kyu**
  **Ansan-si, Gyeonggi-do 15430 (KR)**
- **LIM, Se Hyeong**
  **Ansan-si, Gyeonggi-do 15430 (KR)**
- **JEON, Seung Hwan**
  **Ansan-si, Gyeonggi-do 15430 (KR)**
- **HAN, Eun Jung**
  **Ansan-si, Gyeonggi-do 15430 (KR)**
- **HWANG, Bo Kyeok**
  **Ansan-si, Gyeonggi-do 15430 (KR)**

(74) Representative: **Maiwald GmbH**
**Elisenhof**
**Elisenstraße 3**
**80335 München (DE)**

# (54) RELEASE FILM FOR TRANSFERRING LITHIUM AND METHOD FOR MANUFACTURING SAME

(57) The present invention relates to a release film for transferring lithium and a method for manufacturing the same, and more specifically to a release film for depositing lithium (Li) on a release film and then transferring the same to a current collector of a battery, wherein when lithium (Li) is deposited on the release film, the generation of pin holes is minimized, thereby not only exhibiting excellent deposition efficiency, but also exhibiting excellent efficiency in transferring lithium deposited on the release film to a current collector, and having low lithium peeling strength such that lithium can be easily transferred to the current collector even at low pressure and temperature, and a method for manufacturing the same.

[FIG. 1]

30
20
10

EP 4 796 577 A1

## Description

### TECHNICAL FIELD

The present invention relates to a release film for transferring lithium and a method for manufacturing the same, and more specifically to a release film for depositing lithium (Li) on a release film and then transferring the same to a current collector of a battery, wherein when lithium (Li) is deposited on the release film, the generation of pin holes is minimized, thereby not only exhibiting excellent deposition efficiency, but also exhibiting excellent efficiency in transferring lithium deposited on the release film to a current collector, and having low lithium peeling strength such that lithium can be easily transferred to the current collector even at low pressure and temperature, and a method for manufacturing the same.

### BACKGROUND ART

In batteries, specifically secondary batteries, the battery capacity is reduced compared to the theoretical capacity of a negative electrode material because a large proportion of lithium ions released from a positive electrode during the first charge remain absorbed in a negative electrode. In order to avoid such irreversible capacity loss, a technique is disclosed in which lithium equivalent to the irreversible capacity loss is absorbed in the negative electrode in advance, and then, the secondary battery is assembled to start charging and discharging. By using such a technique, a high proportion of lithium ions released from the positive electrode during the first charge can be recovered to the negative electrode, thereby increasing the battery capacity.

Meanwhile, as a universal method for pre-absorbing lithium into the negative electrode, a method of depositing lithium on the negative electrode is being used. In order to deposit lithium equivalent to the irreversible capacity, a method of increasing the amount of lithium deposited by pre-treating graphite material or silicon graphite material on the current collector is being researched.

However, graphite materials have limited capacity when lithium ions move, and silicon graphite materials are likely to cause rapid volume expansion when lithium ions move, which can cause problems with battery durability.

For this reason, there is a demand for the development of a new method capable of pre-charging a sufficient amount of lithium into the negative electrode and/or preventing volume expansion due to an increase in the amount of lithium, and as one of these methods, a method of depositing lithium metal on a release film and then transferring the same to a current collector, preferably an anode current collector, is being attempted.

In conclusion, with regard to the method of depositing lithium on a release film and then transferring the same to a current collector, a method is needed to secure the uniform deposition of lithium and high transfer efficiency.

### DISCLOSURE

### TECHNICAL PROBLEM

The present invention has been devised to solve the above-described problems, and has an object to provide a release film for transferring film that is capable of ensuring uniform deposition performance and transfer efficiency, and a method for manufacturing the same.

In addition, the present invention has another object to provide a release film for transferring lithium that for the convenience of usage, when a plurality of the release films for transferring lithium according to the present invention are laminated and separated again, the release property is excellent, and it is possible to prevent lithium (Li) from transferring to areas other than an area where lithium is deposited, and a method for manufacturing the same.

In addition, the present invention has still another object to provide a release film for transferring lithium that is capable of easily transferring lithium to a current collector even at low pressure and temperature due to its low lithium peeling strength, and a method for manufacturing the same.

### TECHNICAL SOLUTION

In order to solve the above-described problems. the release film for transferring lithium according to the present invention may have a structure in which a first release layer, a base film; and a second release layer are sequentially laminated.

In a preferred embodiment of the present invention, the release film satisfies Condition (1) below:

$$(1)\ A \geq B$$

wherein in Condition (1) above, A represents a release force of the first release layer, and B represents a release force of the second release layer.

In a preferred embodiment of the present invention, the release film may further satisfy Condition (2) below:

$$(2)\ B : A = 1 : 1.0 \text{ to } 5.0$$

wherein in Condition (2) above, A represents a release force of the first release layer, and B represents a release force of the second release layer.

In a preferred embodiment of the present invention, the base film and the first release layer may have a thickness ratio of 1 : 0.0014 to 0.0026.

In a preferred embodiment of the present invention, the base film and the second release layer may have a thickness ratio of 1 : 0.001 to 0.018.

In a preferred embodiment of the present invention, after lithium is deposited on one surface of the second release layer to a thickness of 2 to 25 μm, when white light is irradiated on the first release layer, 100 or less pin holes may be generated per unit area of 10 cm × 10 cm in the deposited lithium.

In a preferred embodiment of the present invention, after lithium is deposited on one surface of the second release layer to a thickness of 2 to 8 μm, when white light is irradiated on the first release layer, 100 or less pin holes may be generated per unit area of 10 cm × 10 cm in the deposited lithium.

In a preferred embodiment of the present invention, the first release layer may include a resin composition.

In a preferred embodiment of the present invention, the resin composition of the first release layer may include a silicone-based resin in an amount of 10 to 70 wt% based on the total weight%.

In a preferred embodiment of the present invention, the first release layer may include 0.1 to 5 parts by weight of a catalyst and 0.1 to 5 parts by weight of an adhesion enhancer, based on 100 parts by weight of the resin composition.

In a preferred embodiment of the present invention, the first release layer may include 0.1 to 15 wt% of silicon (Si) based on the total weight%.

In a preferred embodiment of the present invention, the second release layer may include 5.0 to 25 wt% of silicon (Si) based on the total weight%.

In a preferred embodiment of the present invention, the release film for transferring lithium according to the present invention may satisfy Condition (3) below:

$$(3)\ C \leq D$$

wherein in Condition (3) above, C represents a weight% of silicon (Si) included in the first release layer, and D represents a weight% of silicon (Si) included in the second release layer.

In a preferred embodiment of the present invention, the base film may include one or more selected from polyethylene terephthalate (PET), polypropylene (PP), polybutylene terephthalate (PBT), polyethylene naphthalate (PEN), polyimide (PI) and polyethylene (PE).

In a preferred embodiment of the present invention, the resin composition of the first release layer may include a silicone-based resin and a non-silicone-based resin.

In a preferred embodiment of the present invention, silicone-based resin may include one or more selected from an addition-reaction type silicone-based resin, a condensation-reaction type silicone-based resin and a UV-reaction type silicone-based resin.

In a preferred embodiment of the present invention, the non-silicone-based resin may include one or more selected from a cellulose resin, an acrylate-based resin, a melamine-based resin and an alkyd-based resin.

Meanwhile, the method for manufacturing a release film for transferring lithium according to the present invention may include a first step of preparing a base film; and a second step of applying a composition for forming a first release layer on one surface of the base film, applying a composition for forming a second release film on the other surface of the base film, and then curing to form a first release layer on one surface of the base film and form a second release layer on the other surface of the base film, wherein the release film satisfies Condition (1) below:

$$(1)\ A < B$$

wherein in Condition (1) above, A represents a release force of the first release layer, and B represents a release force of the second release layer.

In a preferred embodiment of the present invention, the release film for transferring lithium according to the present invention may further satisfy Condition (2) below:

$$(2)\ B : A = 1 : 1.0 \text{ to } 5.0$$

wherein in Condition (2) above, A represents a release force of the first release layer, and B represents a release force of the second release layer.

In a preferred embodiment of the present invention, after lithium is deposited on one surface of the second release layer to a thickness of 2 to 25 μm, when white light is irradiated on the first release layer, 100 or less pin holes may be generated per unit area of 10 cm × 10 cm in the deposited lithium.

In a preferred embodiment of the present invention, the composition for forming a first release layer may be a mixture of a resin composition, a catalyst, an adhesion enhancer and a solvent.

In a preferred embodiment of the present invention, the resin composition of the composition for forming a first release layer may be mixed with 10 to 70 wt% of a silicone-based resin based on the total weight%.

In a preferred embodiment of the present invention, the composition for forming a first release layer may be a mixture of 0.1 to 5 parts by weight of a catalyst, 0.1 to 5 parts by weight of an adhesion enhancer and 800 to 1,000 parts by weight of a solvent, based on 100 parts by weight of the resin composition.

In a preferred embodiment of the present invention, the curing may be performed at a temperature of 100 to 140°C for 10 to 40 seconds.

## ADVANTAGEOUS EFFECTS

The release film for transferring lithium according to the present invention and the method for manufacturing the same are release films for depositing lithium (Li) onto the release film and then transferring the same to a current collector of a battery, and they can increase the capacity of a secondary battery by pre-adsorbing a significant amount of lithium onto a negative electrode current collector that is equivalent to the amount of lithium ions irreversibly lost during the first charge and discharge cycle of a secondary battery.

In addition, the release film for transferring lithium according to the present invention and the method for manufacturing the same have excellent deposition efficiency by minimizing the generation of pin holes when depositing lithium (Li) onto the release film.

In addition, the release film for transferring lithium according to the present invention and the method for manufacturing the same have an excellent release property even when a plurality of the release films for transferring lithium according to the present invention are laminated for the convenience of usage and then are separated again.

In addition, the release film for transferring lithium according to the present invention and the method for manufacturing the same can prevent lithium (Li) from being transferred to other areas other than an area where lithium (Li) is deposited when a plurality of the release films for transferring lithium according to the present invention are laminated for the convenience of usage and are separated again.

In addition, the release film for transferring lithium according to the present invention and the method for manufacturing the same have low lithium peeling strength such that lithium can be easily transferred to a current collector even under low pressure and temperature.

## DESCRIPTION OF DRAWINGS

FIG. 1 is a cross-sectional diagram showing a release film for transferring lithium on one surface according to a preferred embodiment of the present invention.

FIG. 2 is a mimetic diagram showing a process of depositing lithium on one surface of a second release layer, and then observing the generation of pin holes in the deposited lithium by irradiating white light on a first release layer according to a preferred embodiment of the present invention.

## MODES OF THE INVENTION

Hereinafter, with reference to the attached drawings, embodiments of the present invention will be described in detail so that those skilled in the art can easily implement the invention. The present invention may be embodied in various different forms and is not limited to the embodiments described herein. For clarity in the drawings, portions irrelevant to the

description have been omitted, and the same reference numerals are used throughout the specification to refer to identical or similar components.

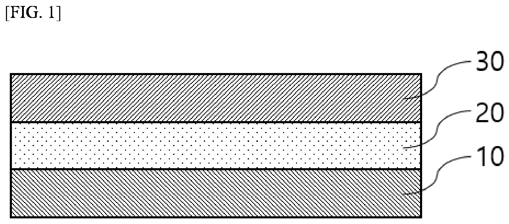

Referring to FIG. 1, the release film for transferring lithium according to the present invention may have a structure in which a first release layer 10, a base film 20 and a second release layer 30 are sequentially laminated.

The first release layer 10 not only improves the release property but also prevents lithium deposited on the second release layer 30 from transferring to the opposite surface.

In addition, the first release layer 10 may have a thickness of 0.05 to 5 μm, preferably a thickness of 0.1 to 1 μm, and more preferably a thickness of 0.1 to 0.3 μm. If the thickness is less than 0.05 μm, there may be a problem of increased release force, and if it is more than 5 μm, there may be a problem of blocking occurring.

In addition, the first release layer 10 may include silicon (Si) in an amount of 0.1 to 15 wt%, preferably 1 to 10 wt%, more preferably 2 to 7 wt%, and even more preferably 4 to 6 wt%, based on the total weight%. If it includes less than 0.1 wt% of silicon, there may be a problem of a decrease in the lithium transfer prevention effect due to an increase in release force, and if it includes more than 15 wt%, there may be a problem of the silicon (Si) component of the first release layer 10 being transferred to lithium that may be deposited on the second release layer 30.

The first release layer 10 may include a resin composition, and the resin composition may include a silicone-based resin in an amount of 10 to 70 wt%, preferably 30 to 70 wt%, more preferably 45 to 70 wt%, and even more preferably 55 to 65 wt%, based on the total weight%. If the silicone-based resin is included in an amount of less than 10 wt%, there may be a problem that lithium (Li) that may be deposited on the second release layer 20 adheres to the first release layer 10, and if it is included in an amount of more than 70 wt%, there may be a problem that excessive silicone components of the first release layer 10 contaminate lithium (Li) that may be deposited on the second release layer 20.

Meanwhile, the silicone-based resin may include one or more selected from an addition-reaction type silicone-based resin, a condensation-reaction type silicone-based resin and a UV-reaction type silicone-based resin, and preferably, it may include an addition-reaction type silicone-based resin.

In addition, the resin composition may include a silicone-based resin and a non-silicone-based resin, and the non-silicone-based resin may be included in an amount of 30 to 90 wt%, preferably 30 to 70 wt%, more preferably 30 to 55 wt%, and even more preferably 35 to 45 wt%, based on the total weight of the resin composition.

In addition, the non-silicone-based resin is a resin that does not include silicon (Si) as a component, and may include one or more selected from a cellulose resin, an acrylate-based resin, a melamine-based resin and an alkyd-based resin, and preferably a cellulose resin.

Furthermore, the first release layer 10 may include 0.1 to 5 parts by weight, preferably 0.5 to 3.0 parts by weight, and more preferably 1.0 to 2.0 parts by weight of a catalyst, based on 100 parts by weight of the resin composition. If the catalyst is included in an amount of less than 0.1 parts by weight, there may be a problem of non-curing, and if it is included in an amount of more than 5 parts by weight, there may be a problem of the peeling strength increasing above a certain level.

In addition, any catalyst commonly used in the art may be used, and preferably, it may include platinum.

Furthermore, the first release layer 10 may include 0.1 to 5 parts by weight, preferably 0.5 to 3.0 parts by weight, and more preferably 0.5 to 1.5 parts by weight of an adhesion enhancer, based on 100 parts by weight of the resin composition. If the adhesion enhancer is included in an amount of less than 0.1 parts by weight, there may be a problem of poor adhesion between the first release layer 10 and the base film 20. If the adhesion enhancer is included in an amount of more than 5 parts by weight, there may be a problem of silicon (Si) included in the first release layer 10 being transferred to the back surface of the base film 20 (the surface on which a third release layer is formed).

The adhesion enhancer is a material that enhances the adhesion between the first release layer 10 and the base film 20. Any adhesion enhancer commonly used in the art may be used, and preferably, it may include dimethyl epoxide-containing methylvinyl siloxane (Dimethyl, Methylvinyl Siloxane with Epoxide).

The base film 20 not only serves as a substrate for forming the first release layer 10 and the second release layer 30, but also serves as a substrate for enabling uniform lithium deposition on the second release layer 30 and/or as a support for transferring lithium that can be deposited on the second release layer 30 to a current collector. Any material used in the art for the base film may be used, and preferably, it may include one or more selected from polyethylene terephthalate (PET), polypropylene (PP), polybutylene terephthalate (PBT), polyethylene naphthalate (PEN), polyimide (PI) and polyethylene (PE), and more preferably, it may include PET.

In addition, the base film 20 of the present invention may have a thickness of 10 to 250 μm, and preferably 25 to 100 μm. If the thickness is less than 10 μm, thermal deformation of the base film 20 may occur during the lithium (Li) deposition process performed at high temperatures. If the thickness is more than 250 μm, the problems of economic feasibility may arise.

The second release layer 30 is a layer that uniformly deposits lithium (Li) or smoothly transfers lithium (Li) to a current collector. It is a layer on which lithium is deposited on one surface for lithium transfer. It may include a silicone-based resin, and preferably, it may include one or more selected from an addition-reaction type silicone-based resin-based, a condensation-reaction type silicone-based resin and a UV-reaction type silicone-based resin, and preferably, it may

include an addition-reaction type silicone-based resin.

In addition, the second release layer 30 may have a thickness of 0.01 to 1 μm, preferably 0.05 to 0.5 μm, and more preferably 0.05 to 0.3 μm. If the thickness is less than 0.01 μm, there may be a problem of poor transfer, and if it is more than 1 μm, there may be a problem of blocking occurring during winding.

In addition, the second release layer 30 may include silicon (Si) in an amount of 5.0 to 25 wt%, preferably 8.0 to 20 wt%, more preferably 10 to 15 wt%, and even more preferably 12 to 14 wt%, based on the total weight. If it includes less than 5.0 wt% of silicon, there may be a problem of significantly lowering the lithium transfer efficiency, and if it includes more than 25 wt%, there may be a problem of increasing the generation rate of pin holes in the deposited lithium when depositing lithium on one surface of the second release layer.

In addition, the second release layer 30 may include 0.1 to 5 parts by weight, preferably 0.5 to 3.0 parts by weight, and more preferably 1.0 to 2.0 parts by weight of a catalyst, based on 100 parts by weight of the silicone-based resin. If the catalyst is included in an amount of less than 0.1 parts by weight, there may be a problem of non-curing, and if it is included in an amount of more than 5 parts by weight, there may be a problem of the release force increasing beyond an appropriate level.

In addition, any catalyst commonly used in the art may be used, and preferably, it may include platinum.

Furthermore, the second release layer 30 may include 0.1 to 5 parts by weight, preferably 0.5 to 3.0 parts by weight, and more preferably 0.5 to 1.5 parts by weight of an adhesion enhancer, based on 100 parts by weight of the silicone-based resin. If the adhesion enhancer is included in an amount of less than 0.1 parts by weight, poor adhesion may occur between the second release layer 30 and the base film 20. If the amount is included in an amount of more than 5 parts by weight, silicon (Si) included in the second release layer 30 may be transferred to the back surface of the base film 20 (the surface on which the first release layer is formed).

The adhesion enhancer is a material that enhances the adhesion between the second release layer 30 and the base film 20. Any adhesion enhancer commonly used in the art may be used, and preferably, it may include dimethyl epoxide-containing methylvinyl siloxane (Dimethyl, Methylvinyl Siloxane with Epoxide).

Meanwhile, the base film 20 and the first release layer 10 may have a thickness ratio of 1:0.0014 to 0.0026, and preferably 1:0.0016 to 0.0024.

In addition, the base film 20 and the second release layer 30 may have a thickness ratio of 1:0.001 to 0.0018, and preferably 1:0.0011 to 0.0016.

Meanwhile, the release film for transferring lithium according to the present invention may satisfy Condition (1) below:

$$(1)\ A \geq B$$

In Condition (1) above, A represents a release force of the first release layer, and B represents a release force of the second release layer.

If Condition (1) is not satisfied, there may be a problem that lithium deposited on the second release layer may transfer to the first release layer.

In addition, the release film for transferring lithium according to the present invention may further satisfy Condition (2) below.

(2) B : A = 1:1.0 to 5.0, preferably B : A = 1:1.5 to 5.0, more preferably B : A = 1:2.5 to 5.0, even more preferably B : A = 1:3.5 to 4.5, and even more preferably B : A = 1:3.5 to 4.0

In Condition (2) above, A represents a release force of the first release layer, and B represents a release force of the second release layer.

If B : A is less than 1 : 1.0, there may be a problem of lithium that can be deposited on the second release layer being transferred to the first release layer, and if it is more than 1 : 5.0, the silicon (Si) content of the first release layer may increase, and the increased silicon (Si) content may cause a problem of silicon (Si) being transferred to the lithium surface that can be deposited on the second release layer.

In addition, the release force of the first release layer may be 10 to 60 gf/inch, preferably 20 to 55 gf/inch, more preferably 30 to 50 gf/inch, and even more preferably 40 to 45 gf/inch. If the release force of the first release layer is less than 10 gf/inch, there may be a problem that excessive silicon components of the first release layer contaminate lithium (Li) that may be deposited on the second release layer, and if it is more than 60 gf/inch, there may be a problem that lithium (Li) that may be deposited on the second release layer sticks to the first release layer.

In addition, the release force of the second release layer may be 1 to 40 gf/inch, preferably 3 to 30 gf/inch, more preferably 5 to 20 gf/inch, and even more preferably 8 to 14 gf/inch. If the release force of the second release layer is less than 1 gf/inch, there may be a problem of lithium (Li) not being uniformly deposited, and if it is more than 40 gf/inch, there may be a problem of lithium (Li) transfer performance deteriorating.

In addition, the release film for transferring lithium according to the present invention may further satisfy Condition (3) below.

$$(3)\ C \leq D$$

In Condition (3) above, C represents a weight% of silicon (Si) included in the first release layer, and D represents a weight% of silicon (Si) included in the second release layer. If Condition (3) above is not satisfied, there may be a problem of lithium (Li) that may be deposited on the second release layer sticking to the first release layer.

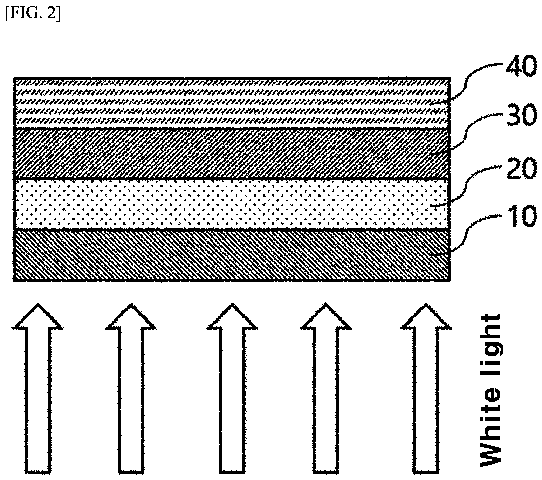

Furthermore, when it is described by referring to FIG. 2, in the release film for transferring lithium according to the present invention, after lithium 40 is deposited on one surface of the second release layer 30 to a thickness of 2 to 25 μm, preferably 2 to 20 μm, more preferably 2 to 15 μm, even more preferably 2 to 8 μm, even more preferably 3 to 7 μm, and even more preferably 4 to 6 μm, when white light is irradiated on the first release layer 10, 100 or less pin holes may be generated in the deposited lithium 40 per unit area of 10 cm × 10 cm. Pin holes refer to pores generated in the lithium 40 during deposition. If more than 100 pin holes are generated per unit area of 10 cm × 10 cm in the lithium 40, there may be a problem in that the lithium 40 is not uniformly deposited. In addition, white light refers to light with a wavelength of 400 to 700 nm.

Meanwhile, the method for manufacturing a release film for transferring lithium according to the present invention includes a first step and a second step.

First of all, in the first step of the method for manufacturing a release film for transferring lithium according to the present invention, a base film may be prepared. In this case, the base film is the same as described above.

Next, in the second step of the method for manufacturing a release film for transferring lithium according to the present invention, a composition for forming a first release layer may be applied to one surface of the base film prepared in the first step, a composition for forming a second release layer may be applied to the other surface of the base film, and then, they may be cured to form a first release layer on one surface of the base film and a second release layer on the other surface of the base film.

The composition for forming a first release layer may be a mixture of a resin composition, a catalyst, an adhesion enhancer and a solvent. Specifically, the composition for forming a first release layer may be a mixture of 0.1 to 5 parts by weight, preferably 0.5 to 3.0 parts by weight, more preferably 1.0 to 2.0 parts by weight of the catalyst, 0.1 to 5 parts by weight, preferably 0.5 to 3.0 parts by weight, more preferably 0.5 to 1.5 parts by weight of the adhesion enhancer, and 800 to 1,000 parts by weight, and preferably 850 to 950 parts by weight of the solvent, based on 100 parts by weight of the resin composition. In this case, the catalyst and the adhesion enhancer are the same as described above. In addition, the solvent may be any solvent generally used in the art, and preferably, it may include one or more selected from toluene, methyl ethyl ketone (MEK), n-hexane and methyl isobutyl ketone (MIBK).

In addition, the resin composition may be a mixture of a silicone-based resin and a non-silicone-based resin, and the silicone-based resin may be mixed in an amount of 10 to 70 wt%, preferably 30 to 70 wt%, more preferably 45 to 70 wt%, and even more preferably 55 to 65 wt%, based on the total weight of the resin composition, and the non-silicone-based resin may be mixed in an amount of 30 to 90 wt%, preferably 30 to 70 wt%, more preferably 30 to 55 wt%, and even more preferably 35 to 45 wt%, based on the total weight of the resin composition. In this case, the silicone-based resin and the non-silicone-based resin are the same as described above.

In addition, the first release layer formed by curing the composition for forming a first release layer may include silicon (Si) in an amount of 0.1 to 15 wt%, preferably 1 to 10 wt%, more preferably 2 to 7 wt%, and even more preferably 4 to 6 wt%, based on the total weight%. In addition, the first release layer is the same as described above.

The composition for forming a second release layer may be a mixture of a silicone-based resin, a catalyst, an adhesion enhancer and a solvent. Specifically, the composition for forming a second release layer may be a mixture of 0.1 to 5 parts by weight, preferably 0.5 to 3.0 parts by weight, more preferably 1.0 to 2.0 parts by weight of the catalyst, 0.1 to 5 parts by weight, preferably 0.5 to 3.0 parts by weight, more preferably 0.5 to 1.5 parts by weight of the adhesion enhancer, and 500 to 5,000 parts by weight, and preferably 550 to 4,000 parts by weight of the solvent, based on 100 parts by weight of the silicone-based resin. In this case, the catalyst and the adhesion enhancer are the same as described above. In addition, the solvent may be any solvent generally used in the art, and preferably, it may include one or more selected from toluene, methyl ethyl ketone (MEK), n-hexane and methyl isobutyl ketone (MIBK).

In addition, the second release layer formed by curing the composition for forming a second release layer may include 5.0 to 25 wt%, preferably 8.0 to 20 wt%, more preferably 10 to 15 wt%, and even more preferably 12 to 14 wt% of silicon (Si) based on the total wt%. In addition, the second release layer is the same as described above.

In addition, the curing of the second step may be performed at a temperature of 100 to 140°C, and preferably 110 to 130°C, for 10 to 40 seconds, and preferably 15 to 25 seconds. If the curing temperature is less than 100°C, there may be a problem of non-curing, and if it is more than 140°C, there may be a problem of thermal deformation occurring in the base film.

Furthermore, when in the release film for transferring lithium manufactured through the method for manufacturing a release film for transferring lithium according to the present invention, after lithium is deposited on one surface of the second release layer to a thickness of 2 to 25 μm, preferably 2 to 20 μm, more preferably 2 to 15 μm, even more preferably 2 to 8 μm, even more preferably 3 to 7 μm, and even more preferably 4 to 6 μm, when white light is irradiated on the first release layer, 100 or less pin holes may be generated per unit area of 10 cm × 10 cm in the deposited lithium.

In addition, the release film for transferring lithium manufactured through the method for manufacturing a release film for transferring lithium according to the present invention may satisfy Condition (1) below:

$$(1)\ A \geq B$$

In Condition (1) above, A represents a release force of the first release layer, and B represents a release force of the second release layer.

In addition, the release film for transferring lithium manufactured through the method for manufacturing a release film for transferring lithium according to the present invention may further satisfy Condition (2) below.

$$(2)\ B : A = 1 : 1.0 \text{ to } 5.0,$$

preferably B : A = 1 : 1.5 to 5.0, more preferably B : A = 1 : 2.5 to 5.0, even more preferably B : A = 1 : 3.5 to 4.5, and even more preferably B : A = 1 : 3.5 to 4.0.

In Condition (2) above, A represents a release force of the first release layer, and B represents a release force of the second release layer.

While the present invention has been described above with reference to embodiments, these are merely illustrative and do not limit the scope of the present invention. Those skilled in the art will appreciate that various modifications and applications not illustrated above are possible without departing from the essential characteristics of the present invention. For example, each component specifically illustrated in the embodiments of the present invention can be modified and implemented. In addition, differences related to these modifications and applications should be construed as being within the scope of the present invention defined in the appended claims.

**Preparation Example 1-1: Preparation of composition for forming second release layer**

A composition for forming a second release layer was prepared by mixing 1.5 parts by weight of a catalyst, 1 part by weight of an adhesion enhancer and 600 parts by weight of a solvent, based on 100 parts by weight of a silicone-based resin. In this case, an addition-reaction type silicone-based resin (Dimethyl, 5-hexenylmethyl siloxane) was used as the silicone-based resin, platinum was used as the catalyst, dimethyl, dimethyl epoxide-containing methylvinyl siloxane was used as the adhesion enhancer, and toluene was used as the solvent.

**Preparation Example 1-2: Preparation of composition for forming second release layer**

A composition for forming a second release layer was prepared by mixing 1.5 parts by weight of a catalyst, 1 part by weight of an adhesion enhancer and 1,100 parts by weight of a solvent, based on 100 parts by weight of a silicone-based resin. In this case, an addition-reaction type silicone-based resin (Dimethyl, 5-hexenylmethyl siloxane) was used as the silicone-based resin, platinum was used as the catalyst, dimethyl epoxide-containing methylvinyl siloxane was used as the adhesion enhancer, and toluene was used as the solvent.

**Preparation Example 1-3: Preparation of composition for forming second release layer**

A composition for forming a second release layer was prepared by mixing 1.5 parts by weight of a catalyst, 1 part by weight of an adhesion enhancer and 3,500 parts by weight of a solvent, based on 100 parts by weight of a silicone-based resin. In this case, an addition-reaction type silicone-based resin (Dimethyl, 5-hexenylmethyl siloxane) was used as the silicone-based resin, platinum was used as the catalyst, dimethyl epoxide-containing methylvinyl siloxane was used as the adhesion enhancer, and toluene was used as the solvent.

**Preparation Example 1-4: Preparation of composition for forming second release layer**

A composition for forming a second release layer was prepared by mixing 1.5 parts by weight of a catalyst, 1 part by weight of an adhesion enhancer and 900 parts by weight of a solvent, based on 100 parts by weight of the mixed

composition. In this case, a mixture of 80 wt% of a silicone-based resin and 20 wt% of dimethylvinylated and trimethylated silica (CAS Reg. No. 68988-89-6) was used as the mixed composition, based on the total weight%. Platinum was used as the catalyst, dimethyl epoxide-containing methylvinyl siloxane was used as the adhesion enhancer, and toluene was used as the solvent. In addition, an addition-reaction type silicone-based resin (dimethyl, 5-hexenylmethyl siloxane) was used as the silicone-based resin.

**Preparation Example 2: Preparation of composition for forming first release layer**

A composition for forming a first release layer was prepared by mixing 1.5 parts by weight of a catalyst, 1 part by weight of an adhesion enhancer and 900 parts by weight of a solvent, based on 100 parts by weight of the resin composition. In this case, a mixture of 60 wt% of a silicone-based resin and 40 wt% of a non-silicone-based resin was used as the resin composition, based on the total weight%. Platinum was used as the catalyst, dimethyl epoxide-containing methylvinyl siloxane was used as the adhesion enhancer, and toluene was used as the solvent. In addition, an addition-reaction type silicone-based resin (dimethyl, 5-hexenylmethyl siloxane) was used as the silicone-based resin, and a cellulose resin was used as the non-silicone-based resin.

**Example 1: Manufacture of release film for transferring lithium**

(1) A 75 μm-thick polyethylene terephthalate (PET) film (XD510P, TAK) was prepared as a base film.
(2) Using a bar coater, the composition for forming a first release layer prepared in Preparation Example 2 was applied to one surface of the prepared base film, and the composition for forming a second release layer prepared in Preparation Example 1-1 was applied to the other surface of the base film. It was then cured at 120°C for 20 seconds and aged at 40°C for 2 days. A first release layer having a thickness of 0.15 μm was formed on one surface of the base film, and a second release layer having a thickness of 0.1 μm was formed on the other surface of the base film, thereby manufacturing a release film for transferring lithium.

**Example 2: Manufacture of release film for transferring lithium**

A release film for transferring lithium was manufactured by using the same method as in Example 1. However, unlike Example 1, the composition for forming a second release layer prepared in Preparation Example 1-2 was used instead of the composition for forming a second release layer prepared in Preparation Example 1-1 to form a second release layer with a thickness of 0.08 μm, thereby ultimately manufacturing a release film for transferring lithium.

**Example 3: Manufacture of release film for transferring lithium**

A release film for transferring lithium was manufactured by using the same method as Example 1. However, unlike Example 1, the composition for forming a second release layer prepared in Preparation Example 1-3 was used instead of the composition for forming a second release layer prepared in Preparation Example 1-1 to form a second release layer with a thickness of 0.025 μm, thereby ultimately manufacturing a release film for transferring lithium.

**Example 4: Manufacture of release film for transferring lithium**

A release film for transferring lithium was manufactured by using the same method as Example 1. However, unlike Example 1, the composition for forming a second release layer prepared in Preparation Example 1-4 was used instead of the composition for forming a second release layer prepared in Preparation Example 1-1 to form a second release layer with a thickness of 0.1 μm, thereby ultimately manufacturing a release film for transferring lithium.

**Example 5: Manufacture of release film for transferring lithium**

A release film for transferring lithium was manufactured by using the same method as Example 1. However, unlike Example 1, the composition for forming a second release layer prepared in Preparation Example 1-4 was used instead of the composition for forming a first release layer prepared in Preparation Example 2 to form a first release layer with a thickness of 0.1 μm, thereby ultimately manufacturing a release film for transferring lithium.

**Example 6: Manufacture of release film for transferring lithium**

A release film for transferring lithium was manufactured by using the same method as Example 1. However, unlike Example 1, the composition for forming a second release layer prepared in Preparation Example 1-3 was used instead of the composition for forming a first release layer prepared in Preparation Example 2 to form a first release layer with a thickness of 0.1 μm, thereby ultimately manufacturing a release film for transferring lithium.

**Example 7: Manufacture of release film for transferring lithium**

A release film for transferring lithium was manufactured by using the same method as Example 1. However, unlike Example 1, the composition for forming a second release layer prepared in Preparation Example 1-2 was used instead of the composition for forming a first release layer prepared in Preparation Example 2 to form a first release layer with a thickness of 0.1 μm, thereby ultimately manufacturing a release film for transferring lithium.

**Example 8: Manufacture of release film for transferring lithium**

A release film for transferring lithium was manufactured by using the same method as in Example 1. However, unlike Example 1, the composition for forming a second release layer prepared in Preparation Example 1-1 was used instead of the composition for forming a first release layer prepared in Preparation Example 2 to form a first release layer with a thickness of 0.1 μm, thereby ultimately manufacturing a release film for transferring lithium.

**Comparative Example 1: Manufacture of release film for transferring lithium**

(1) A 75 μm-thick polyethylene terephthalate (PET) film (XD510P, TAK) was prepared as the base film.
(2) Using a bar coater, the composition for forming a second release layer prepared in Preparation Examples 1-4 was applied to one surface of the prepared base film. It was then cured at 120°C for 20 seconds and aged at 40°C for 2 days to form a second release layer with a thickness of 0.1 μm on one surface of the base film, thereby manufacturing a release film for transferring lithium.

**Experimental Example 1: Evaluation of release property and lithium transfer to first release layer**

Lithium was deposited to a thickness of 5 μm on one surface of the second release layer of each of the release films for transferring lithium manufactured in Examples 1 to 8 and Comparative Example 1 by using the physical vapor deposition (PVD) method. Two release films for transferring lithium with the lithium deposited thereon were laminated, and a weight with a load of 2 kg/cm$^2$ was laminated to the lithium formed on the surface of the release film for transferring lithium, and it was then left at 40°C for 2 days. Afterwards, when separating the two laminated release films for transferring lithium, if no sticky sound was generated at all, it was evaluated as ◎, if only a very small sticky sound was generated, it was evaluated as ◦, and if a loud sticky sound was generated, it was evaluated as X. The release property was evaluated, and the results are shown in Tables 1 and 2 below. In addition, after evaluating the release property, the transfer of lithium to the first release layer of the separated release films for transferring lithium was determined. If no lithium was generated, it was evaluated as ◦, and if lithium was generated, it was evaluated as X. The evaluation of whether lithium was transferred to the first release layer was performed, and the result are shown in Tables 1 and 2 below.

**Experimental Example 2: Measurement of number of pin holes**

Lithium was deposited to a thickness of 5 μm on one surface of the second release layer of each of the release films for transferring lithium manufactured in Examples 1 to 8 and Comparative Example 1 by using the physical vapor deposition (PVD) method. Thereafter, the first release layer of each of the release films for transferring lithium manufactured in Examples 1 to 8 and Comparative Example 1 were irradiated with white light, and the deposited lithium was visually observed. The number of pin holes per unit area of 10 cm × 10 cm was determined, and the results are shown in Tables 1 and 2.

**Experimental Example 3-1: Measurement of release force of first release layer**

An acrylic adhesive tape (TESA7475) measuring 25 mm wide × 175 mm long was attached to the first release layers of the release films for transferring lithium manufactured in Examples 1 to 8 and Comparative Example 1,

respectively. The release forces of the first release layers of the release films for transferring lithium manufactured in Examples 1 to 8 and Comparative Example 1 were measured by using the Finat-10 test method, and the results are shown in Tables 1 and 2 below.

**Experimental Example 3-2: Measurement of release force of second release layer**

An acrylic adhesive tape (TESA7475) measuring 25 mm wide × 175 mm long was attached to the second release layers of the release films for transferring lithium manufactured in Examples 1 to 8 and Comparative Example 1, respectively. The release forces of the second release layers of the release films for transferring lithium manufactured in Examples 1 to 8 and Comparative Example 1 were measured by using the Finat-10 method, and the results are shown in Tables 1 and 2 below.

**Experimental Example 4: Measurement of silicon (Si) content**

The silicon (Si) content in the first and second release layers of the release films for transferring lithium manufactured in Examples 1 to 8 and Comparative Example 1 was measured by using a scanning electron microscope (SEM) equipped with an Energy Dispersive X-ray Spectroscopy (EDS), and the results are shown in Tables 1 and 2 below.

**Experimental Example 5: Measurement of Lithium transfer efficiency**

Lithium was deposited to a thickness of 5 μm on one surface of the second release layer of each of the release films for transferring lithium manufactured in Examples 1 to 8 and Comparative Example 1 by using the physical vapor deposition (PVD) method. The lithium deposited on the release film for transferring lithium was then roll-laminated to one surface of a copper foil used as a negative electrode current collector, and the release film for transferring lithium was removed, thereby transferring lithium to the copper foil. After transfer, the area of lithium remaining on the release film for transferring lithium was visually confirmed, and the lithium transfer efficiency was calculated by using Calculation Formula 1 below, and the results are shown in Tables 1 and 2 below.

Lithium Transfer Efficiency (%) = (Area of lithium deposited on release film for transferring lithium - Area of lithium remaining on release film for transferring lithium after transferring lithium deposited on release film for transferring lithium to copper foil) / Area of lithium deposited on release film for transferring lithium [Calculation Formula 1]

**Experimental Example 6: Measurement of lithium peeling strength**

Lithium was deposited to a thickness of 10 μm on one surface of the second release layer of each of the release films for transferring lithium manufactured in Examples 1 to 8 and Comparative Example 1 by using the physical vapor deposition (PVD) method. Afterwards, Kapton tape measuring 25 mm × 175 mm was then attached to one surface of the lithium. After allowing the film to stand for 30 minutes, the lithium (Li) peeling strength was measured by using the Finat-10 test method, and the results are shown in Tables 1 and 2 below.

[Table 1]

| Classification | | Example 1 | Example 2 | Example 3 | Example 4 | Comparative Example 1 |
|---|---|---|---|---|---|---|
| Release Property | | ◎ | ◎ | ◎ | ◎ | X |
| Whether Lithium Is Transferred to First Release Layer | | ◎ | ◎ | ◎ | ○ | X |
| Number of Pin Holes (Units) | | 100 or less | 100 or less | 100 or less | 100 or less | 100 or less |
| Release Force (gf/inch) | First Release Layer | 42 | 42 | 42 | 42 | - |
| | Second Release Layer | 11 | 15 | 20 | 35 | 35 |

(continued)

| Classification | | Example 1 | Example 2 | Example 3 | Example 4 | Comparative Example 1 |
|---|---|---|---|---|---|---|
| Silicon Content (wt%) | First Release Layer | 4.8 | 4.8 | 4.8 | 4.8 | - |
| | Second Release Layer | 12.9 | 8.4 | 7.5 | 5.7 | 5.7 |
| Lithium Transfer Efficiency (%) | | | 100 | 100 | 100 | 100 |
| Lithium Peeling Strength (gf/inch) | | 16.5 | 17.7 | 33 | 45 | 47 |

[Table 2]

| Classification | | Example 1 | Example 5 | Example 6 | Example 7 | Example 8 |
|---|---|---|---|---|---|---|
| Release Property | | ◎ | ◎ | ◎ | ◎ | ○ |
| Whether Lithium Is Transferred to First Release Layer | | ◎ | ◎ | ◎ | ○ | ○ |
| Number of Pin Holes (Units) | | 100 or less | 100 or less | 100 or less | 10 or less | 100 or less |
| Release Force (gf/inch) | First Release Layer | 42 | 35 | 20 | 15 | 11 |
| | Second Release Layer | 11 | 11 | 11 | 11 | 11 |
| Silicon Content (wt%) | First Release Layer | 4.8 | 5.7 | 7.5 | 8.4 | 12.9 |
| | Second Release Layer | 12.9 | 12.9 | 12.9 | 12.9 | 12.9 |
| Lithium Transfer Efficiency (%) | | | 100 | 100 | 100 | 100 |
| Lithium Peeling Strength (gf/inch) | | | 16.6 | 16.6 | 16.6 | 16.7 |

As confirmed in Tables 1 and 2, it was confirmed that the release film for transferring lithium manufactured in Example 1 not only exhibited the excellent release property, but also showed no lithium transfer to the first release layer, a pinhole count of 100 or less, excellent lithium transfer efficiency, and low lithium peeling strength, thereby allowing lithium to be easily transferred to a current collector even at low pressure and temperature.

**Experimental Example 6: Measurement of number of pin holes**

Lithium was deposited on one surface of the second release layer of the release film for transferring lithium manufactured in Example 1 by using the physical vapor deposition (PVD) method to thicknesses of 5 μm, 10 μm, 15 μm, 20 μm and 30 μm, respectively. Afterwards, white light was irradiated on the first release layer of each of the release films for transferring lithium manufactured in Example 1, in which lithium was deposited at different thicknesses, and the deposited lithium was observed with the naked eye. The number of pin holes generated per unit area of 10 cm × 10 cm is shown in Table 3.

[Table 3]

| Thickness of Lithium | Number of Pin Holes (Units) |
|---|---|
| 5 μm | 100 or less |
| 10 μm | 100 or less |
| 15 μm | 100 or less |
| 20 μm | 100 or less |
| 30 μm | Thermal deformation occurs |

As confirmed in Table 3, even when lithium was deposited to thicknesses of 5 μm, 10 μm, 15 μm and 20 μm on one surface of the second release layer of the release film for transferring lithium manufactured in Example 1, the number of pinholes per unit area (10 cm × 10 cm) was confirmed to be 100 or less. However, when lithium was deposited to a thickness of 30 μm on one surface of the second release layer of the release film for transferring lithium manufactured in Example 1, thermal deformation occurred during the deposition process.
Simple modifications or variations of the present invention can be readily implemented by those skilled in the art, and all such modifications or variations are considered to fall within the scope of the present invention.

## Claims

1. A release film for transferring lithium, in which a first release layer, a base film; and a second release layer are sequentially laminated,

   wherein the release film satisfies Condition (1) below:

   $$(1)\ A \geq B$$

   wherein in Condition (1) above, A represents a release force of the first release layer, and B represents a release force of the second release layer.

2. The release film of claim 1, wherein the release film further satisfies Condition (2) below:

   $$(2)\ B : A = 1 : 1.0 \text{ to } 5.0$$

   wherein in Condition (2) above, A represents a release force of the first release layer, and B represents a release force of the second release layer.

3. The release film of claim 1, wherein after lithium is deposited on one surface of the second release layer to a thickness of 2 to 25 μm, when white light is irradiated on the first release layer, 100 or less pin holes are generated per unit area of 10 cm × 10 cm in the deposited lithium.

4. The release film of claim 3, wherein after lithium is deposited on one surface of the second release layer to a thickness of 2 to 8 μm, when white light is irradiated on the first release layer, 100 or less pin holes are generated per unit area of 10 cm × 10 cm in the deposited lithium.

5. The release film of claim 1, wherein the first release layer comprises a resin composition, and wherein the resin composition comprises a silicone-based resin in an amount of 10 to 70 wt% based on the total weight%.

6. The release film of claim 5, wherein the first release layer comprises 0.1 to 5 parts by weight of a catalyst and 0.1 to 5 parts by weight of an adhesion enhancer, based on 100 parts by weight of the resin composition.

7. The release film of claim 1, wherein the first release layer comprises 0.1 to 15 wt% of silicon (Si) based on the total weight%,

   wherein the second release layer comprises 5.0 to 25 wt% of silicon (Si) based on the total weight%, and wherein the release film satisfies Condition (3) below:

   $$(3)\ C \leq D$$

   wherein in Condition (3) above, C represents a weight% of silicon (Si) comprised in the first release layer, and D represents a weight% of silicon (Si) comprised in the second release layer.

8. The release film of claim 1, wherein the base film comprises one or more selected from polyethylene terephthalate (PET), polypropylene (PP), polybutylene terephthalate (PBT), polyethylene naphthalate (PEN), polyimide (PI) and

polyethylene (PE).

9. The release film of claim 5, wherein the resin composition comprises a silicone-based resin and a non-silicone-based resin,

wherein the silicone-based resin comprises one or more selected from an addition-reaction type silicone-based resin, a condensation-reaction type silicone-based resin and a UV-reaction type silicone-based resin, and wherein the non-silicone-based resin comprises one or more selected from a cellulose resin, an acrylate-based resin, a melamine-based resin and an alkyd-based resin.

10. A method for manufacturing a release film for transferring lithium, the method comprising:

a first step of preparing a base film; and
a second step of applying a composition for forming a first release layer on one surface of the base film, applying a composition for forming a second release film on the other surface of the base film, and then curing to form a first release layer on one surface of the base film and form a second release layer on the other surface of the base film, wherein the release film satisfies Condition (1) below:

$$(1)\ A < B$$

wherein in Condition (1) above, A represents a release force of the first release layer, and B represents a release force of the second release layer.

11. The method of claim 10, wherein the release film further satisfies Condition (2) below:

$$(2)\ B : A = 1 : 1.0 \text{ to } 5.0$$

wherein in Condition (2) above, A represents a release force of the first release layer, and B represents a release force of the second release layer.

12. The method of claim 10, wherein after lithium is deposited on one surface of the second release layer to a thickness of 2 to 25 μm, when white light is irradiated on the first release layer, 100 or less pin holes are generated per unit area of 10 cm × 10 cm in the deposited lithium.

13. The method of claim 10, wherein the composition for forming a first release layer is a mixture of a resin composition, a catalyst, an adhesion enhancer and a solvent, and
wherein the resin composition is mixed with 10 to 70 wt% of a silicone-based resin based on the total weight%.

14. The method of claim 13, wherein the composition for forming a first release layer is a mixture of 0.1 to 5 parts by weight of a catalyst, 0.1 to 5 parts by weight of an adhesion enhancer and 800 to 1,000 parts by weight of a solvent, based on 100 parts by weight of the resin composition.

15. The method of claim 10, wherein the curing is performed at a temperature of 100 to 140°C for 10 to 40 seconds.

[FIG. 1]

30
20
10

[FIG. 2]

40
30
20
10
White light

TRANSLATION

## INTERNATIONAL SEARCH REPORT

International application No.
**PCT/KR2025/018396**

### A. CLASSIFICATION OF SUBJECT MATTER

**C08J 7/04**(2006.01)i; **C08J 5/18**(2006.01)i; **C09D 183/04**(2006.01)i; **C09D 7/61**(2018.01)i; **C09D 7/65**(2018.01)i; **C08L 1/02**(2006.01)i; **C08L 33/04**(2006.01)i; **C08L 61/28**(2006.01)i; **H01M 4/04**(2006.01)i

According to International Patent Classification (IPC) or to both national classification and IPC

### B. FIELDS SEARCHED

Minimum documentation searched (classification system followed by classification symbols)

C08J 7/04(2006.01); B32B 27/00(2006.01); B32B 27/36(2006.01); C08J 5/18(2006.01); C08J 7/044(2020.01); H01M 10/052(2010.01); H01M 4/134(2010.01); H01M 4/139(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (MOIP internal) & keywords: 이형필름(release film), 이형층(release layer), 이형력(release force), 리튬 전사(lithium transfer), 실리콘계 수지(silicon-based resin), 규소(Si, silicon), 핀 홀(pin hole)

### C. DOCUMENTS CONSIDERED TO BE RELEVANT

| Category* | Citation of document, with indication, where appropriate, of the relevant passages | Relevant to claim No. |
|---|---|---|
| Y | KR 10-2020-0087437 A (LG CHEM, LTD.) 21 July 2020 (2020-07-21)<br>abstract; claims 7-9; paragraphs [0055], [0063], [0090]; example 1 | 1-4,8,10-12,15 |
| A | | 5-7,9,13,14 |
| Y | KR 10-2017-0097965 A (YOULCHON CHEMICAL CO., LTD.) 29 August 2017 (2017-08-29)<br>claims 1, 2; paragraph [0039]; figure 2 | 1-4,8,10-12,15 |
| A | KR 10-2023-0114731 A (LG ENERGY SOLUTION, LTD.) 01 August 2023 (2023-08-01)<br>claims 1, 3, 5-8; paragraphs [0036], [0134], [0136], [0146], [0147] | 1-15 |
| A | KR 10-2140127 B1 (LG CHEM, LTD.) 31 July 2020 (2020-07-31)<br>paragraphs [0058], [0078]; example 1 | 1-15 |
| A | JP 2006-007550 A (MITSUBISHI POLYESTER FILM CORPORATION) 12 January 2006 (2006-01-12)<br>claim 1; paragraphs [0028]-[0030], [0033] | 1-15 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **26 February 2026** | **26 February 2026** |

Name and mailing address of the ISA/KR

**Korean Intellectual Property Office**
**Government Complex-Daejeon Building 4, 189 Cheongsa-ro, Seo-gu, Daejeon 35208**

Facsimile No. **+82-42-481-8578**

Authorized officer

Telephone No.

Form PCT/ISA/210 (second sheet) (July 2022)

TRANSLATION

INTERNATIONAL SEARCH REPORT

International application No.
**PCT/KR2025/018396**

**C. DOCUMENTS CONSIDERED TO BE RELEVANT**

| Category* | Citation of document, with indication, where appropriate, of the relevant passages | Relevant to claim No. |
|---|---|---|
| PX | KR 10-2729163 B1 (YOULCHON CHEMICAL CO., LTD.) 14 November 2024 (2024-11-14) claims 1-4, 6-12, 14, 15; paragraphs [0055]-[0058], [0060], [0065], [0068], [0072], [0073], [0075] | 1-15 |

Form PCT/ISA/210 (second sheet) (July 2022)

TRANSLATION

**INTERNATIONAL SEARCH REPORT**
**Information on patent family members**

International application No.
**PCT/KR2025/018396**

| Patent document cited in search report | Publication date (day/month/year) | Patent family member(s) | Publication date (day/month/year) |
|---|---|---|---|
| KR 10-2020-0087437 A | 21 July 2020 | CN 111868974 A | 30 October 2020 |
| | | CN 111868974 B | 10 November 2023 |
| | | EP 3764436 A1 | 13 January 2021 |
| | | EP 3764436 B1 | 03 May 2023 |
| | | ES 2946684 T3 | 24 July 2023 |
| | | HU E062138 T2 | 28 September 2023 |
| | | JP 2021-517729 A | 26 July 2021 |
| | | JP 7248777 B2 | 29 March 2023 |
| | | KR 10-2415166 B1 | 29 June 2022 |
| | | PL 3764436 T3 | 10 July 2023 |
| | | US 11942629 B2 | 26 March 2024 |
| | | US 2021-0020927 A1 | 21 January 2021 |
| | | WO 2020-145753 A1 | 16 July 2020 |
| KR 10-2017-0097965 A | 29 August 2017 | KR 10-1774874 B1 | 05 September 2017 |
| KR 10-2023-0114731 A | 01 August 2023 | CN 117897828 A | 16 April 2024 |
| | | EP 4369434 A1 | 15 May 2024 |
| | | JP 2024-530032 A | 14 August 2024 |
| | | US 2024-0332494 A1 | 03 October 2024 |
| | | WO 2023-146256 A1 | 03 August 2023 |
| KR 10-2140127 B1 | 31 July 2020 | CN 110168782 A | 23 August 2019 |
| | | CN 115579457 A | 06 January 2023 |
| | | EP 3547411 A1 | 02 October 2019 |
| | | EP 3547411 B1 | 09 August 2023 |
| | | JP 2019-537224 A | 19 December 2019 |
| | | JP 2021-141081 A | 16 September 2021 |
| | | JP 2024-103562 A | 01 August 2024 |
| | | JP 7543215 B2 | 02 September 2024 |
| | | KR 10-2018-0119254 A | 02 November 2018 |
| | | US 2020-0075939 A1 | 05 March 2020 |
| | | US 2024-0429378 A1 | 26 December 2024 |
| | | WO 2018-199505 A1 | 01 November 2018 |
| JP 2006-007550 A | 12 January 2006 | WO 2006-001151 A1 | 05 January 2006 |
| KR 10-2729163 B1 | 14 November 2024 | KR 10-2025-0071145 A | 21 May 2025 |
| | | KR 10-2025-0071146 A | 21 May 2025 |
| | | WO 2025-105892 A1 | 22 May 2025 |

Form PCT/ISA/210 (patent family annex) (July 2022)